# EUROPEAN PATENT APPLICATION

(11) **EP 0 706 257 A2**
(43) Date of publication of application: **10.04.1996**
(21) Application number: 95115018.4
(22) Date of filing: 25.09.1995
(51) Int. Cl.: H02M 3/335

(54) **Switch mode power supply circuit**

(30) Priority: 03.10.1994 GB 9419878
(71) Applicant: THOMSON multimedia S.A., F-92400 Courbevoie (FR)
(72) Inventor: Wu, Chun Hsing, Singapore 2057 (SG); Chong, Kim Heng, Singapore 1953 (SG)
(74) Representative: Ahrens, Thomas

(57) **Abstract**

Within an SMPS during start-up the base current for the power transistor is derived from a charging capacitor. Sufficient saturation of the power transistor requires a high base current. However, a high base current can discharge said capacitor too much so that voltage at said capacitor and base current are undesirably reduced.

It is an object to secure sufficient base current for the power transistor by avoiding too much discharge of said capacitor. The driving transistor TP01 is connected via RP41 to said charging capacitor CP04 but additionally via diode DP31 and RP31 to winding of the transformer. So base current for TP10 is the sum of the current through RP41 and DP31 - RP31. Voltage at pin 10 of the transformer is proportional to mains voltage. Thus, the base current for TP10 will increase when the mains voltage is high, thereby fulfilling the requirement of the driving optimization.

## Description

The invention relates to a switch mode power supply circuit (SMPS) according to the introductory part of claim 1.

Within such a circuit there is provided a driver stage especially in push/pull relationship for providing a base current for the switching transistor being connected via a primary winding of the transformer to a DC operating voltage. For providing operating potentials for said driver stage the supply terminal of said driver stage is connected to a charging capacitor which is connected to a current source preferably being connected to the main rectifier. During on-period of said switching transistor, base current is derived from said charging capacitor via said driver stage to base of said switching transistor. For optimal driving said switching transistor, that means receiving full saturation during on-time, a relative high base current is needed. If said base current is completely drawn from said charging capacitor, this will frequently cause a dilemma between choosing a higher base current to saturate said switching transistor which would result undervoltage problem or avoid the under-voltage protection by reducing the driving current which would face an under-driving problem.

It is an object of the invention to modify the switch mode power supply circuit in such a way that the control of the switching transistor during start-up is improved. This object is solved by the features of claim 1. Additional advantageous features according to embodiments of the invention are described within the subclaims.

According to the invention the supply terminal of the driver stage which is connected to said charging capacitor is additionally connected to the output of a rectifier having its input connected to a primary winding of the SMPS-transformer.

By this solution the following advantages are achieved. Said rectifier provides an additional current source for the charging capacitor and the driver stage. Thereby an undesired under-voltage at said capacitor during start-up can be reduced or even be avoided. As said rectifier is supplied by said primary winding of said transformer which is connected to operating potential derived from main voltage said additional charging current for said charging capacitor advantageously is dependent from main voltage. If main voltage increases and drive base current for said switching transistor should be increased, too, said additional charging current for said charging capacitor is also increased. That means that an optimizing the driving capability independent from main fluctuation is achieved. The invention only needs a few additional elements so that additional costs for the switch mode power supply remain very low.

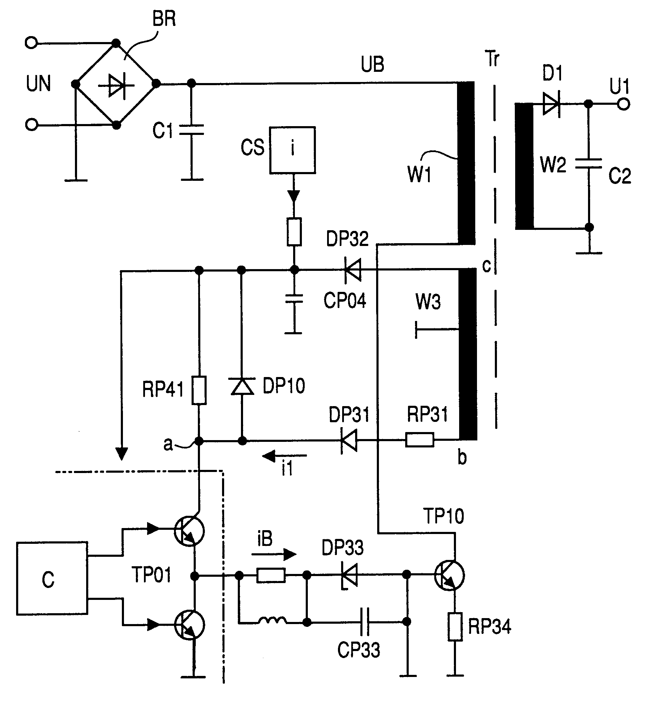

In order that the invention might be better understood, one example of the invention will now be described with the aid of the accompanying drawing. The signal figure in said drawing shows a circuit diagram of a switch mode power supply circuit including the present invention.

Within the figure there are represented main voltage UN, main rectifier BR, smoothing capacitor C1, transformer Tr having main primary winding W1, secondary winding W2 and an additional winding W3, switching transistor TP10, control circuit C, driver stage TP01, biasing network including Zener diode DP33 and capacitor CP33, charging capacitor CP04 connected to current source CS and via resistor RP41 to supply terminal a of driver stage TP01.

TP10 is switched by control circuit C on/off with a frequency of about 30 - 40 kHz inducing corresponding pulses at secondary winding W2. Rectifier circuit with diode D1 and capacitor C2 derives a first operating voltage U1. Normally transformer Tr has a higher number of secondary windings W2 for generating operating potentials of different amplitude and polarity.

Capacitor CP04 is the main current source for driver stage TP01 providing base current iB for transistor TP10. During start-up period where CP04 has to be charged, it can occur that due to necessary high current iB CP04 is too much discharged so that an undesired under-voltage can occur at capacitor CP04. Due to this fact iB is not sufficient so that there is a danger for TP10 because of insufficient saturation.

In order to avoid this disadvantage, there is provided an additional current path to terminal a including resistor RP31 and diode DP31. This current path provides an additional current i1 to terminal a so that the risk of undesired under-voltage at CP04 is reduced.

Additional current i1 provided by voltage at tap b of additional winding W3 is dependent from main voltage UN. This is an advantage because now said additional current i1 supporting base current iB is dependent on main voltage so that iB is desirably increased, if main voltage increases.

Additional diode DP32 is provided between end C of winding W3 and capacitor CP04 for effecting additional charge of CP04.

## Claims

1. Switch mode power supply circuit including a transformer (Tr), having a main primary winding (W1) connected to a switching transistor (TP10), a driver stage (TP01) for controlling said switching transistor (TP10) the supply terminal (a) of said driver stage being connected to a charging capacitor (CP04) which is connected to a current source (CS),
**characterized in that** said supply terminal (a) additonally is connected to the output of a rectifier (DP31) having it's input connected to a primary winding (W3).

2. Circuit according to claim 1 **characterized in that said** primary winding is an additional primary winding (W3) separated from said main primary winding (W1).

3. Circuit according to claim 2, **characterized in that** said additional winding (W3) has a tap connected to ground and having it's first end connected to the input of said rectifier (DP31) and havin it's second end (C) connected via a second rectifier (DP32) to said charging capacitor (CP04).
